# EUROPÄISCHE PATENTSCHRIFT

(11) **EP 3 099 479 B1**
(45) Veröffentlichungstag und Bekanntmachung des Hinweises auf die Patenterteilung: **28.06.2023**
(21) Anmeldenummer: 14808498.1
(22) Anmeldetag: 27.11.2014
(51) Int. Cl.: B30B 9/24, B01D 33/04, B65G 17/38, F26B 5/14, B65G 17/40

(54) **PRESSVORRICHTUNG**
PRESSING DEVICE
DISPOSITIF DE COMPRESSION

(30) Priorität: 03.12.2013 DE 102013018093
(43) Veröffentlichungstag der Anmeldung: 07.12.2016
(73) Patentinhaber: Bohnert, Johannes, 77883 Ottenhöfen (DE)
(72) Erfinder: BÄUERLE, Simon, 79133 Karlsruhe (DE)
(74) Vertreter: Börjes-Pestalozza, Henrich
(86) Internationale Anmeldenummer: PCT/EP2014/003174
(87) Internationale Veröffentlichungsnummer: WO 2015/082059

(56) Entgegenhaltungen:
- FR-A- 538 228
- FR-E- 26 637
- JP-A- S61 259 898
- JP-A- S62 141 338
- JP-U- S4 993 462
- JP-U- H02 138 093
- US-A- 3 581 901

## Beschreibung

Die Erfindung betrifft eine Pressvorrichtung mit einem Endlosförderer, der eine Vielzahl von Fördergliedern hat, die zu einem endlos umlaufenden Strang miteinander verbunden sind und von denen benachbarte Förderglieder jeweils über einen, eine Schwenkachse bildenden Bolzen schwenkbar miteinander verbunden sind, sowie mit wenigstens einer Presswalze, die zur Druckbeaufschlagung des auf dem Endlosförderer geförderten Pressguts zwischen der Presswalze und dem Endlosförderer in einer Presszone vorgesehen ist, wobei benachbarte Förderglieder des Endlosförderers ineinandergreifende Finger aufweisen, welche Finger der diese Förderglieder verbindende Bolzen durchsetzt, und wobei die Förderglieder in der Presszone eine solche Schwenkposition zueinander einnehmen, dass die Außenseite des Endlosförderers in diesem Bereich eine vor- und rücksprunglose, plattenförmig geschlossene Oberfläche bilden.

Die Druckschrift FR 538 228 A offenbart eine Presse, die das Pressgut durch doppeltes Walzen auf der Außenseite einer Endloskette mit einer Vielzahl von Kettengliedern bearbeitet. Die beschriebene Presse dient in erster Linie dazu, den in den Trauben enthaltenen Most zu extrahieren, sobald diese vom Weinberg in den Keller gelangen, oder den Trester au den Trauben zu trocknen. Während die größere, in Förderrichtung vordere Presswalze, die den oberen Trum der Endloskette etwa mittig beaufschlagt, eine erste Presszone definiert, drückt die kleinere, in Förder¬richtung hintere und eine zweite Presszone bildende Presswalze im Bereich einer der Umlenkrollen auf die Endloskette. Dabei dreht sich die in der zweiten Presszone vorgesehene kleinere Presswalze mit einer im Vergleich zu der in der ersten Presszo¬ne angeordneten Presswalze höheren Umdrehungsgeschwindigkeit um. Damit auch aus roten Trauben nur der weiße Traubensaft und nicht auch der in den Schalen befindliche rote Farbstoff ausgepresst wird, beaufschlagen die beiden Presswalzen die Enloskette mit vergleichsweise geringem Druck, wobei die in der zweiten Presszone angeordnete Presswalze zudem eine elastische Oberfläche aus Kautschuk oder dergleichen hat. Da die Presswalzen die Endloskette und das auf ihr befindliche Pressgut mit vergleichsweise geringem Pressdruck beaufschlagen, besteht bei der vorbekannten Presse auch nicht die Gefahr, dass das Pressgut in die Förderglieder der Endloskette eingedrückt wird; vielmehr fällt dieses Pressgut im Umlenkbereich zwischen oberem und unterem Trum der Endloskette herab.

Die ältere Druckschrift FR 26 637 E desselben Anmelders betrifft lediglich die Ausgestaltung der Förderglieder des in der vorbekannten Pressvorrichtung verwendeten Endlosförderers.

Aus der JP H02 138093 U kennt man bereits eine Pressvorrichtung, die einen um zwei Umlenkrollen geführten Endlosförderer hat. Dieser Endlosförderer, dessen oberer Trum etwa mittig zwischen den Umlenkrollen von einer Presswalze beaufschlagt wird, ist kettenartig aus Fördergliedern gebildet, die eine in Seitenansicht etwa konkave Außenkontur haben. Die JP H02 138093 U befasst sich nicht mit dem Problem, mit welchen Mitteln die störungsfreie Funktion des Endlosförderers auch über eine längere Betriebsdauer hinweg gewährleistet werden könnte.:

Aus der deutschen Gebrauchsmusterschrift DE 20 2011 102 965 U1 ist bereits eine Pressvorrichtung vorbekannt, die einen Endlosförderer hat, mit welchem das Pressgut zu einer Presszone hin bewegbar ist. Der Endlosförderer der vorbekannten Pressvorrichtung ist als Plattenkette ausgebildet, deren als Förderglieder dienenden Platten zu einem endlos umlaufenden Strang miteinander verbunden sind. Dabei sind benachbarte Platten jeweils über einen, eine Schwenkachse bildenden Bolzen schwenkbar miteinander verbunden. In der Presszone der vorbekannten Pressvorrichtung ist eine Presswalze angeordnet, die zur Druckbeaufschlagung des auf dem Endlosförderer geförderten Pressguts zwischen der Presswalze und dem Endlosförderer in einer Presszone vorgesehen ist.

Die aus DE 20 2011 102 965 U1 vorbekannte Vorrichtung ist zur mechanischen Trocknung von Holzhackschnitzeln bestimmt, um vor dem Verfeuern dieser Holzhackschnitzel die darin enthaltene Holzfeuchte zu reduzieren. Derartige Pressvorrichtungen der eingangs erwähnten Art sind aber für die verschiedensten Anwendungen verwendbar, um ein zur Weiterverwendung bestimmtes Pressgut zu entfeuchten oder zu komprimieren und/oder um das in einem Pressgut enthaltene Fluid zum Zwecke der Weiterverwendung zu gewinnen.

In DE 20 2011 102 965 U1 ist nicht weiter beschrieben, wie die dort als Endlosförderer dienende Plattenkette ausgestaltet sein muss, die derart hohen Druckbelastungen standzuhalten vermag, um eine möglichst hohe Arbeitsleistung der Pressvorrichtung sicherzustellen.

Es besteht daher insbesondere die Aufgabe, eine Pressvorrichtung der eingangs erwähnten Art zu schaffen, die sich durch eine hohe Belastbarkeit und Leistungsfähigkeit auszeichnet.

Die erfindungsgemäße Lösung dieser Aufgabe besteht bei der Pressvorrichtung der eingangs erwähnten Art insbesondere darin, dass der Presszone eine Aufbrechzone in Umlaufrichtung des Endlosförderers folgt, in welcher Aufbrechzone der Endlosförderer derart umgelenkt wird, dass seine Außenseite konkav gebogen ist.

Die erfindungsgemäße Pressvorrichtung weist einen Endlosförderer auf, bei dem benachbarte Förderglieder ineinandergreifende Finger aufweisen, welche Finger der diese Förderglieder verbindende Bolzen durchsetzt. In der Presszone nehmen die Förderglieder eine solche Schwenkposition zueinander ein, dass die Außenseite des Endlosförderers in diesem Bereich eine vor- und rücksprunglose und somit eine plattenförmig oder plattenartig geschlossene Oberfläche bilden, die auch einer hohen Druckbeaufschlagung Stand zu halten vermag, ohne dass befürchtet werden muss, dass größere Mengen des Pressguts durch den Endlosförderer hindurch bis zu dessen Innenseite hindurchgedrückt werden. Da benachbarte Förderglieder des Endlosförderers ineinandergreifende Finger aufweisen, die der die Förderglieder verbindende Bolzen durchsetzt, ist auch der Bolzen der benachbarten Förderglieder geschützt angeordnet, wobei die ineinandergreifenden Finger auch in diesem Bereich eine geschlossene plattenförmige Oberfläche an der Außenseite des Endlosförderers sicherstellen. Auch die allenfalls geringe Menge des in der Presszone in den Endlosförderer gepressten Pressguts werden im Anschluss an die Presszone vom Endlosförderer entfernt, weil der Presszone eine Aufbrechzone in Umlaufrichtung des Endlosförderers folgt, in welcher Aufbrechzone der Endlosförderer derart umgelenkt wird, dass seine Außenseite konkav gebogen ist. Die erfindungsgemäße Pressvorrichtung zeichnet sich daher durch einen hoch belastbaren Endlosförderer aus, auf dem das Pressgut derart druckbeaufschlagt werden kann, dass die im Pressgut enthaltene Feuchtigkeit besonders gut von der Trockenmasse des Pressguts getrennt werden kann. Die erfindungsgemäße Pressvorrichtung zeichnet sich daher auch durch eine hohe Leistungsfähigkeit aus.

Möglich ist es, dass wenigstens ein Förderglied einstückig ausgebildet und an seinem, einem benachbarten Förderglied zugewandten außenseitigen Umfangsteilbereich zumindest einen vorstehenden Finger trägt. Derart einstückig ausgebildete Förderglieder können sich bei besonders hohen Druckbelastungen anbieten, - solche einstückigen Förderglieder sind jedoch nur mit einem hohen Aufwand herstellbar.

Eine mit geringerem Aufwand herstellbare und dennoch hoch belastbare Ausführungsform gemäß der Erfindung sieht vor, dass wenigstens ein Förderglied aus zumindest zwei, flachseitig aneinander anliegenden Förderglied-Platten gebildet ist, die derart versetzt miteinander verbunden sind, dass ein, über mindestens eine erste Förderglied-Platte vorstehender Teilbereich wenigstens einer zweiten Förderglied-Platte als Finger ausgebildet ist. Bei dieser Ausführungsform wird das wenigstens eine Förderglied als Paket aus zumindest zwei, flachseitig aneinander anliegenden Förderglied-Platten gebildet. Diese Förderglied-Platten lassen sich mit geringem Aufwand herstellen, wobei die vorstehenden Finger des wenigstens einen Fördergliedes durch die versetzte Anordnung der Förderglied-Platten gebildet werden.

Dabei sieht eine besonders einfache, hoch belastbare und mit geringem Aufwand herstellbare Ausführungsform gemäß der Erfindung vor, dass wenigstens ein Förderglied als Plattenpaket ausgebildet ist, welches entweder aus mindestens einer ersten und zwei zweiten Förderglied-Platten oder umgekehrt aus mindestens zwei ersten Förderglied-Platten und einer zweiten Förderglied-Platte gebildet ist.

Da der erfindungsgemäß verwendete Endlosförderer in der Presszone an seiner Außenseite eine vor- und rücksprunglose, plattenförmige Oberfläche bildet, und da die erfindungsgemäße Pressvorrichtung sich durch eine hohe Leistungsfähigkeit und somit auch durch hohe Mengen ausgepressten Fluids auszeichnet, sieht eine bevorzugte Ausführungsform gemäß der Erfindung vor, dass der Endlosförderer auf seiner Innenseite quer zur Förderrichtung orientierte Einsenkungen hat.

Dabei sieht eine bevorzugte Ausführungsform gemäß der Erfindung vor, dass die Einsenkungen als rechtwinklig zur Förderrichtung orientierte Rillen oder Rinnen ausgebildet sind.

Um eine kontinuierliche und gleichmäßige Umlaufbewegung des Endlosförderers zu begünstigen, ist es vorteilhaft, wenn die Einsenkungen in gleichmäßigen Abständen über den Innenumfang des Endlosförderers verteilt angeordnet sind.

Damit die in der Aufbrechzone gelockerten Anteile des Pressguts aus den Spalten des Endlosförderers entfernt werden können, ist es vorteilhaft, wenn zwischen der Aufbrechzone und der Presszone in Umlaufrichtung des Endlosförderers eine Ausräumzone angeordnet ist, in welcher der Endlosförderer derart umgelenkt wird, dass seine Außenseite konvex gebogen ist.

Eine bevorzugte Weiterbildung gemäß der Erfindung sieht vor, dass der Endlosförderer in der Presszone um eine Umlenkrolle oder -walze umläuft, und dass die Umlenkrolle oder -walze sowie die Presswalze oder -rolle den geringsten Abstand zueinander in einem Punkt oder in einem Bereich aufweisen, der auf einer durch die Drehachsen dieser Rollen oder Walzen verlaufenden Linie oder Ebene angeordnet ist.

Um in der Ausräumzone die zuvor in der Aufbrechzone gelockerten Pressgut-Anteile entfernen zu können, wird eine Ausführungsform bevorzugt, bei der die in der Presszone vorgesehene Umlenkrolle im Vergleich zu der in der Aufbrechzone und/oder der Ausräumzone angeordneten Umlenkrolle einen größeren Durchmesser aufweist.

Um die schwenkbare Verbindung der benachbarten Förderglieder einerseits und des die Finger durchsetzenden Bolzen andererseits zu begünstigen, ist es vorteilhaft, wenn die Finger der Förderglieder jeweils ein Loch aufweisen, in welchen Löchern der, benachbarte Förderglieder verbindende Bolzen die Förderglieder durchsetzt.

Um die Schwenkzone zwischen dem Bolzen einerseits und den, durch den Bolzen miteinander verbundenen Fördergliedern andererseits nicht derart ölen zu müssen, dass das Öl anschließend auch in dem ausgepressten Fluid enthalten ist, ist es vorteilhaft, wenn die Bolzen und/oder die an den Fingern der Förderglieder vorgesehenen Löcher eine reibungsarme oder reibungsmindernde Schicht und insbesondere eine Teflonschicht tragen.

Damit das im Pressgut enthaltene und im Bereich der Presszone ausgepresste Fluid leicht durch die Förderglieder des Endlosförderers hindurchtreten und an der Innenseite des Endlosförderers rasch abfließen kann, ist es vorteilhaft, wenn an den Fingern der Förderglieder zumindest einseitig eine flachseitige und zur Innenseite hin offene Einformung vorgesehen ist.

Dabei sieht eine bevorzugte Ausführungsform gemäß der Erfindung vor, dass die Finger zur Außenseite des Endlosförderers hin im Vergleich zu dem das Loch des entsprechenden Fingers im Übrigen umgrenzenden Finger-Teilbereich eine größere Dicke aufweisen.

In der Aufbrechzone wird der Endlosförderer derart umgelenkt, dass die Außenseite des Endlosförderers eine konkav gebogene Kontur einnimmt. Durch diese konkave Biegung des Endlosförderers in der Aufbrechzone öffnen sich die Quer- und Längsspalte des Endlosförderers sehr weit und die in den Endlosförderer eventuell eingequetschten Pressgut-Anteile werden gelöst. Dabei wird ein Öffnen der Quer- und Längsspalte des Endlosförderers noch begünstigt, wenn der Radius an der Außenseite der Querspalte eines Fördergliedes im Vergleich zum Radius an der Innenseite der Querspalte des zugeordneten benachbarten Fördergliedes einen abweichenden und vorzugsweise einen größeren Radius aufweisen, insbesondere derart, dass diese Förderglieder in der Presszone eine geschlossene. Außenseite des Endlosförderers bilden und in der Aufbrechzone ein Öffnen der Querspalte zwischen diesen Fördergliedern erfolgt. Die konkave Biegung in der Aufbrechzone ergibt - verbunden mit der erwähnten Geometrie - ein weiteres Öffnen der Spalte und somit eine Lockerung des eingedrungenen Pressgutes. Dabei wird das Öffnen der Querspalte begünstigt, wenn der Radius an der Außenseite des Querspaltes größer ist als der Radius an der Innenseite des Querspaltes.

Um die erfindungsgemäße Pressvorrichtung mit einer höchst möglichen Belastbarkeit auszugestalten und um den Pressdruck möglichst ungeschwächt auf das Pressgut übertragen zu können, ist es vorteilhaft, wenn die Förderglieder an ihrer, die Innenseite des Endlosförderers bildenden Unterseite einen Radius haben, der etwa dem Radius der in der Presszone angeordneten Umlenkrolle entspricht.

Um den Endlosförderer an seinem Außenumfang mit einer möglichst geschlossenen Oberfläche zu bilden, ist es vorteilhaft, wenn die Förderglieder an ihrer, die Oberseite des Endlosförderers bildenden Außenseite im Vergleich zu dem an der Unterseite der Förderglieder vorgesehenen Radius einen entsprechend der Bauhöhe des Endlosförderers größeren Radius ausweisen.

Damit die aus dem Pressgut entweichende und durch den Endlosförderer hindurchtretende Flüssigkeit auch aus dem zwischen dem Endlosförderer und den Umlenkrollen oder- walzen angeordneten Bereich abfließen und entfernt werden kann, ist es vorteilhaft, wenn zumindest eines der Förderglieder des Endlosförderers auf seiner Unterseite die Einsenkungen aufweist.

Um auch die Querspalte zwischen den Fördergliedern des Endlosförderers zum Abtransport der aus dem Pressgut entweichenden Flüssigkeit verwenden zu können, ist es vorteilhaft, wenn die an der Unterseite des zumindest einen Fördergliedes vorgesehenen Einsenkungen derart orientiert sind, dass sie die über die Breite des Endlosförderers versetzten Querspalte verbinden.

Um den Endlosförderer während des Betriebes der erfindungsgemäßen Pressvorrichtung umlaufen zu lassen, und um dazu eine Drehantriebskraft auf den Endlosförderer aufbringen zu können, ist es vorteilhaft, wenn die Umlenkrolle oder -walze umfangsseitig Mitnehmer hat, die mit Mitnehmer-Aufnahmen am Endlosförderer in Antriebsverbindung zu bringen sind.

Dabei sieht eine bevorzugte Ausführung gemäß der Erfindung vor, dass Einsenkungen als Mitnehmer-Aufnahmen ausgebildet sind.

Um die Förderglieder des Endlosförderers bei Bedarf auch auf einfache Weise reparieren zu können, ist es vorteilhaft, wenn die ein Förderglied bildenden Platten über Schraubverbindungen miteinander verbunden sind. Eine solche Schraubverbindung lässt sich leicht lösen, zum Beispiel wenn das betreffende Förderglied im Bereich zumindest einer seiner Förderglied-Platten einen Schaden aufweist.

Damit das in der Presszone der erfindungsgemäßen Pressvorrichtung komprimierte Pressgut nicht beidseits der Pressvorrichtung ausweichen kann, ist es vorteilhaft, wenn beidseits des Endlosförderers zumindest im Bereich der Presszone angeordnete und in Förderrichtung orientierte Leitplanken für das Pressgut vorgesehen sind. Diese Leitplanken haben auch die Funktion, den Endlosförderer seitlich zu führen.

Um die Antriebskraft gut auf den Endlosförderer übertragen zu können und um ungleichmäßige Belastungen des Endlosförderers zu vermeiden, kann es vorteilhaft sein, wenn dem Endlosförderer eine Spannvorrichtung zugeordnet ist die verhindert, dass der Endlosförderer nicht zumindest bereichsweise durchhängt.

Dabei sieht eine bevorzugte Ausführungsform gemäß der Erfindung vor, dass zumindest eine der Umlenkrollen derart verstellbar in der Pressvorrichtung vorgesehen ist, dass die zumindest eine Umlenkrolle als Spanneinrichtung für den Endlosförderer dient.

Die Herstellung der erfindungsgemäßen Pressvorrichtung und ihres Endlosförderers wird wesentlich vereinfacht, wenn die Förderglied-Platten zumindest eines Fördergliedes denselben Außenumriss und vorzugsweise dieselbe Breite haben, und wenn die Förderglied-Platten des zumindest einen Fördergliedes sich vorzugsweise nur in der für die Schrauben vorgesehenen Bohrung unterscheiden.

Um das Pressgut möglichst sicher und vollständig in die Presszone führen zu können und um eine unerwünschte Verstopfung der Pressvorrichtung in Umlaufrichtung des Endlosförderers vor der Presszone zu verhindern, ist es vorteilhaft, wenn das Pressgut im Einlaufbereich der Pressvorrichtung von oben zuführbar ist oder zugeführt wird, und wenn vorzugsweise eine Pressgut-Führung vorgesehen ist, die als mitlaufendes: Förderband ausgeführt ist.

Die erfindungsgemäße Pressvorrichtung ist überall dort vorteilhaft einsetzbar, wo ein Pressgut entfeuchtet und/oder komprimiert werden muss. Die erfindungsgemäße Pressvorrichtung ist auch dort vorteilhaft einsetzbar, wo aus einem Pressgut ein Fluid gewonnen werden muss. Bevorzugt wird eine Verwendung, bei der die Pressvorrichtung zum Entfeuchten des Pressguts bestimmt ist und bei der die Pressvorrichtung insbesondere zum Entfeuchten von Holzhackschnitzeln vorgesehen ist.

Weiterbildungen gemäß der Erfindung ergeben sich aus den Ansprüchen in Verbindung mit den Figuren sowie der Beschreibung. Nachstehend wird die Erfindung anhand eines bevorzugten Ausführungsbeispieles noch näher beschrieben.

Es zeigt:
- Fig. 1: eine in einer schematisierten Seitenansicht dargestellte Pressvorrichtung, die einen Endlosförderer sowie eine Presswalze hat, die zur Druckbeaufschlagung des auf dem Endlosförderer geförderten Pressguts zwischen der Presswalze und dem Endlosförderer in einer Presszone vorgesehen ist,
- Fig. 2: einen Abschnitt des Endlosförderers in einer perspektivischen Draufsicht, wobei die Förderglieder des Endlosförderers in unterschiedlichen Schwenkstellungen zueinander dargestellt sind,
- Fig. 3: den in Figur 2 gezeigten Abschnitt des Endlosförderers in einer Seitenansicht,
- Fig. 4: eine Förderglied-Platte des aus einem Paket von Förderglied-Platten bestehenden Fördergliedes des in den Figuren 1 bis 3 gezeigten Endlosförderers,
- Fig. 5: zwei Förderglied-Platten benachbarter Förderglieder des in den Figuren 1 bis 3 gezeigten Endlosförderers in einer Seitenansicht, und
- Fig. 6: die in den Figuren 1 bis 5 gezeigte Pressvorrichtung in einer seitlichen Perspektivdarstellung, wobei beidseits des Endlosförderers Leitplanken vorgesehen sind, die ein Ausweichen des Pressguts aus dem Bereich der Presszone verhindern.

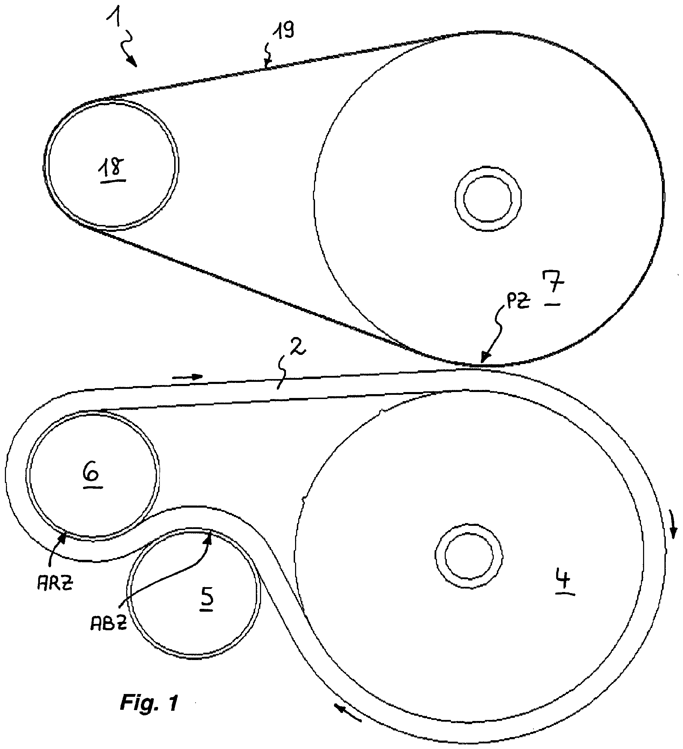

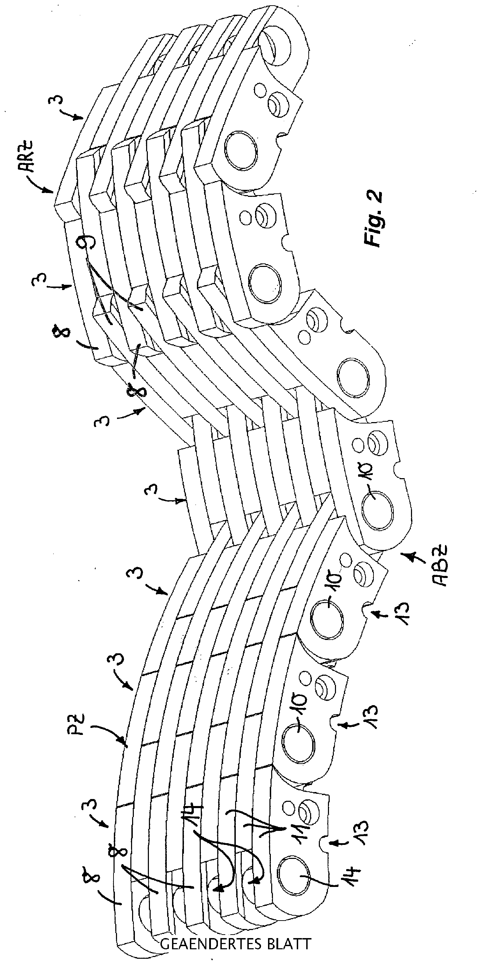

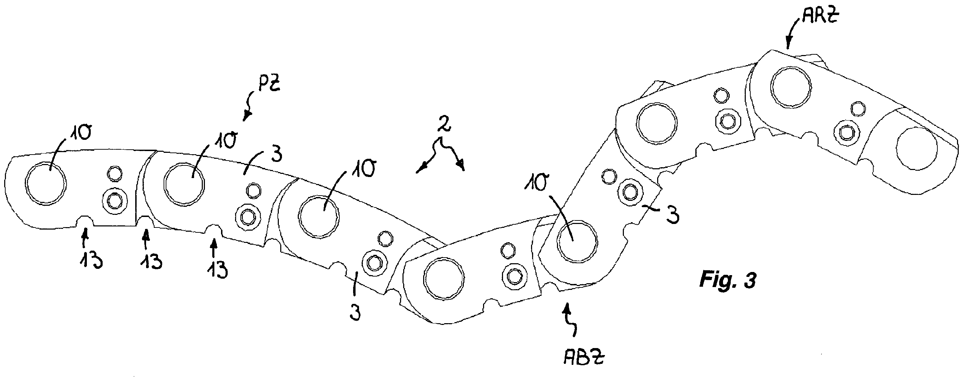

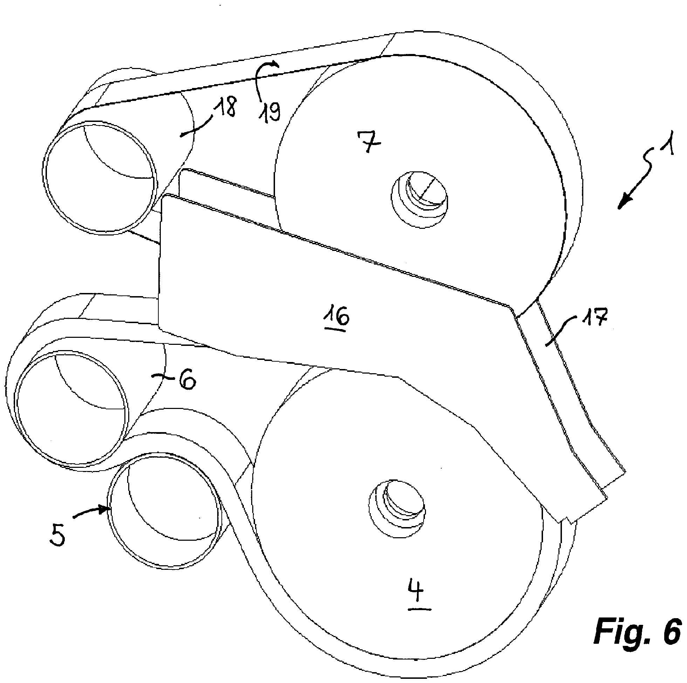

In Figur 1 und 6 ist eine Pressvorrichtung 1 in einer schematischen Darstellung gezeigt. Die Pressvorrichtung 1 hat einen Endlosförderer 2, der eine Vielzahl von Fördergliedern 3 aufweist, die zu einem endlos umlaufenden und über Umlenkrollen 4, 5, 6 oder Umlenkwalzen mehrfach umgelenkten Strang miteinander verbunden sind. Während ein Abschnitt des Endlosförderers 2 in den Figuren 2 und 3 gezeigt ist, sind die Förderglieder 3 des Endlosförderers 2 in den Figuren 2 bis 5 näher dargestellt.

Aus den Figuren 2 und 3 wird deutlich, dass benachbarte Förderglieder 3 des Endlosförderers 2 jeweils über einen, eine Schwenkachse bildenden Bolzen 10 schwenkbar miteinander verbunden sind.

Die Pressvorrichtung 1 hat auch wenigstens eine Presswalze 7, die zur Druckbeaufschlagung des auf dem Endlosförderer 2 geförderten Pressguts zwischen der Presswalze 7 und dem Endlosförderer 2 in einer Presszone PZ vorgesehen ist. In Figur 2 ist erkennbar, dass benachbarte Förderglieder 3 des Endlosförderers 2 ineinandergreifende Finger 8, 9 aufweisen, die von dem diese Förderglieder 3 verbindenden Bolzen 10 durchsetzt werden. Anhand der in den Figuren 2 und 3 links abgebildeten Förderglieder 3, die hier in einer der Presszone PZ entsprechenden Schwenkstellung abgebildet sind, wird deutlich, dass diese Förderglieder 3 in der Presszone PZ eine solche Schwenkposition zueinander einnehmen, dass die Außenseite des Endlosförderers 2 in diesem Bereich eine vor- und rücksprunglose, plattenartig geschlossene Oberfläche bilden, die auch einer hohen Druckbeaufschlagung Stand zu halten vermag, ohne dass befürchtet werden muss, dass größere Mengen des Pressguts durch den Endlosförderer 2 hindurch bis zu dessen Innenseite hin durchgedrückt werden. Da benachbarte Förderglieder 3 des Endlosförderers 2 ineinandergreifende Finger 8, 9 aufweisen, die der die Förderglieder 3 verbindende Bolzen 10 durchsetzt, ist auch der Bolzen 10 der benachbarten Förderglieder 3 geschützt angeordnet, wobei die ineinandergreifenden Finger 8, 9 auch in diesem Bereich eine geschlossene plattenartige Oberfläche an der Außenseite des Endlosförderers 2 sicherstellen. Auch die allenfalls geringe Menge des in der Presszone PZ in den Endlosförderer 2 gepressten Pressguts werden im Anschluss an die Presszone PZ vom Endlosförderer 2 entfernt, weil der Presszone PZ eine Aufbrechzone ABZ in Umlaufrichtung des Endlosförderers 2 folgt, in welcher Aufbrechzone ABZ der Endlosförderer 2 derart umgelenkt wird, dass seine Außenseite konkav gebogen ist. Die hier gezeigte Pressvorrichtung 1 zeichnet sich daher durch einen hoch belastbaren Endlosförderer 2 aus, auf dem das Pressgut derart druckbeaufschlagt werden kann, dass die im Pressgut enthaltene Feuchtigkeit besonders gut von der Trockenmasse des Pressguts getrennt werden kann. Die hier dargestellte Pressvorrichtung 1 zeichnet sich darüber hinaus auch durch eine hohe Leistungsfähigkeit aus.

In den Figuren 2 und 3 ist gezeigt, dass die Förderglieder 3 aus zumindest zwei, flachseitig aneinander anliegenden Förderglied-Platten 11 gebildet sind, welche Förderglied-Platten 11 derart versetzt miteinander verbunden sind, deren außen liegenden Schmalseiten zu der Außenseite des Endlosförderes gehören und dass ein über mindestens eine Förderglied-Platte 11 vorstehender Teilbereich wenigstens einer zweiten Förderglied-Platte 11 als Finger 8, 9 ausgebildet ist. Dabei werden die ineinandergreifenden Finger 8, 9 benachbarter Förderglieder 3 von dem diese Förderglieder 3 verbindenden Bolzen 10 durchsetzt. Da benachbarte Förderglieder 3 des Endlosförderers 2 die ineinandergreifenden Finger 8, 9 aufweisen, die der diese Förderglieder 3 verbindende Bolzen 10 durchsetzt, ist auch der Bolzen 10 der benachbarten Förderglieder 3 geschützt angeordnet, wobei die ineinandergreifenden Finger 8, 9 auch in diesem Bereich eine plattenartig geschlossene Oberfläche an der Außenseite des Endlosförderers 2 sicherstellen. Insbesondere können die Finger 8 eines Fördergliedes 3 zumindest im Bereich des Bolzens 10 an der Außenseite des Endlosförderers 2 die Abstände zwischen den Figuren 9 eines benachbarten Fördergliedes 3 weitestgehend - insbesondere bis auf zwischen ihnen verbleibende Spalte - ausfüllen und umgekehrt.

Die Förderglieder 3 des hier dargestellten Endlosförderers 2 sind als ein aus wenigstens einer ersten und mindestens zwei zweiten Förderglied-Platten 11 gebildetes Plattenpaket ausgebildet. In den Figuren 2 bis 5 ist erkennbar, dass der Endlosförderer 2 auf seiner Innenseite quer zur Förderrichtung orientierte Einsenkungen 13 hat, die das Abfließen des mittels der erfindungsgemäßen Pressvorrichtung 1 ausgepressten Fluids im Bereich zwischen dem Endlosförderer 2 und den Umlenkrollen, insbesondere der Umlenkrolle 4, erleichtern. Dabei sind die Einsenkungen 13 als rechtwinklig zur Förderrichtung orientierte Rillen oder Rinnen ausgebildet.

Aus einem Vergleich der Figuren 1 bis 3 und der dort gezeigten Einsenkungen 13 einerseits sowie der dort ebenfalls abgebildeten Umlenkrolle 4 andererseits wird deutlich, dass die Einsenkungen 13 in gleichmäßigen Abständen über den Innenumfang des Endlosförderers 2 verteilt angeordnet sind.

In Figur 1 ist erkennbar, dass zwischen der Aufbrechzone ABZ und der Presszone PZ in Umlaufrichtung des Endlosförderers eine Ausräumzone ARZ angeordnet ist, in welcher Ausräumzone ARZ der Endlosförderer 2 derart umgelenkt wird, dass seine Außenseite konvex gebogen ist. In Figur 1 ist erkennbar, dass die Umlenkrolle oder -walze 4 sowie die Presswalze oder -rolle 7 den geringsten Abstand zueinander in einem Punkt oder in einem Bereich der Presszone PZ aufweisen, der auf einer durch die Drehachsen dieser Rollen 4, 7 oder Walzen verlaufenden Linie angeordnet ist. Dabei weist die in der Presszone PZ vorgesehene Umlenkrolle 4 im Vergleich zu den in der Aufbrechzone ABZ und in der Ausräumzone ARZ angeordneten Umlenkrollen 5, 6 einen größeren Durchmesser auf.

In den Figuren 2 bis 5 ist gezeigt, dass die Finger 8, 9 der Förderglieder 2 jeweils ein Loch 14 aufweisen, in welchen Löchern 14 der, benachbarte Förderglieder 2 verbindende Bolzen 10 die Förderglieder 2 durchsetzt. Dabei wird eine besonders gute Verschwenkbarkeit der benachbarten Förderglieder 2 um den die Schwenkachse bildenden Bolzen 10 begünstigt, wenn die an den Fingern 8, 9 der Förderglieder 2 vorgesehenen Löcher 14 oder vorzugsweise an den Bolzen 10 eine reibungsarme oder reibungsmindernde Schicht und insbesondere eine Teflonschicht vorgesehen ist.

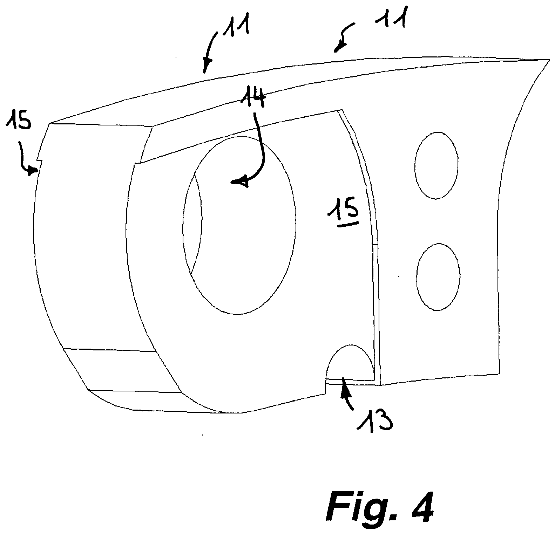

Wie die in Figur 4 gezeigte Seitenansicht einer der ein Förderglied 2 bildenden Förderglied-Platten 11 zeigt, kann an den Fingern 8, 9 der Förderglieder 2 zumindest einseitig und vorzugsweise - wie hier - beidseits eine flachseitige und zur Innenseite des Endlosförderers 2 hin offene Einformung 15 vorgesehen sein. Dabei weisen die Finger 8, 9 zur Bildung eine möglichst geschlossenen Außenseite zur Außenseite des Endlosförderers 2 hin eine im Vergleich zu dem das Loch 14 des entsprechenden Fingers 8, 9 im Übrigen umgrenzenden Finger-Teilbereich eine größere Dicke auf.

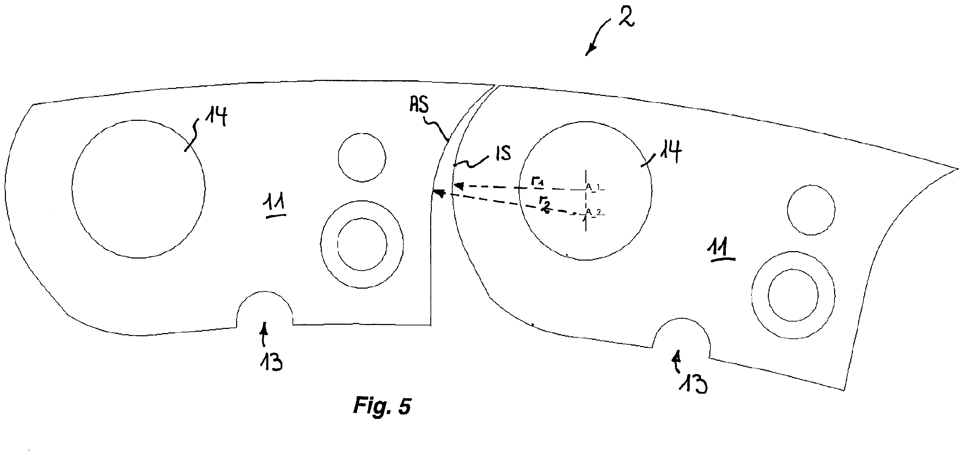

In der Seitenansicht in Figur 5 ist angedeutet, dass die Lochmittelpunkte der in den Fingern 8, 9 vorgesehenen Löcher 14 miteinander fluchten. Dabei ist der Mittelpunkt A₂ der in der Außenseite AS der Querspalte vorgesehenen Radien, welche im Vergleich zu den Radien an der Innenseite IS der Querspalte größer sind, tieferliegend angeordnet, wobei der Endlosförderer 2 in der Presszone PZ eine plattenartig nahezu geschlossene Außenseite bildet. Dadurch ergibt sich eine Öffnung des Spaltes zur Innenseite hin, während sich in der Aufbrechzone ABZ die Querspalte öffnen. In der Ausräumzone ARZ ergibt sich ein Abstreifen des eingepressten Pressgutes zur Innenseite des Endlosförderers beziehungsweise ein Durchdrücken auf dessen Außenseite. Zu erkennen ist auch, dass die Förderglieder auf ihrer die Innenseite des Endlosförderers 2 bildenden Unterseite einen Radius haben, der etwa dem Radius der Umlenkrolle 4 in der Presszone entspricht. Die die Außenseite des Endlosförderers 2 bildende Oberseite der Förderglieder 3 weist einen entsprechend der Bauhöhe des Endlosförderers 2 demgegenüber größeren Radius auf.

Die hier dargestellte Pressvorrichtung 1 ist insbesondere zum Entfeuchten von Holzhackschnitzeln vorgesehen. Die Pressvorrichtung 1 ermöglicht einen kontinuierlich arbeitenden Pressvorgang. Ziel dieses Pressvorganges ist es, flüssige oder viskose Komponenten eines Pressgutes vom Pressgut zu trennen. Dabei bildet der Endlosförderer 2 der Pressvorrichtung 1 ein sich selbstreinigendes, mechanisches Trennsystem, welches die flüssigen oder viskosen Komponenten bereits in der Presszone voneinander trennt und somit eine Wiederaufnahme dieser Komponenten durch das Pressgut beziehungsweise eine erneute Vermischung mit dem Pressgut nach dem Verlassen der Presszone PZ verhindert.

Hier nicht weiter dargestellt ist, dass die Presswalze 7 einerseits und die den Endlosförderer 2 abstützende Umlenkrolle 4 andererseits mit Hilfe einer Hydraulik zusammengedrückt werden. Die Presswalze 7 und die Umlenkrolle 4 sind dazu drehbar auf zwei waagrechten Hebeln gelagert. Diese Hebel werden mit Hilfe der erwähnten Hydraulik zusammengedrückt. Dabei wird der Endlosförderer 2 zwischen den Rollen oder Walzen 4, 7 hindurchgeführt. Das auf dem Endlosförderer 2 befindliche Pressgut wird mit Hilfe des Endlosförderers 2 der Presszone PZ zugeführt. Dabei sind die Umlenkrolle 4 sowie die Presswalze 7 mit Hilfe eines Rollen- oder Walzenantriebes drehantreibbar, wobei der kettenartige Endlosförderer 2 aufgrund des Kraftschlusses in der Presszone PZ mitgezogen wird.

In den Figuren 2 bis 5 sind die Einsenkungen 13 erkennbar. Diese Einsenkungen 13 sind an der Unterseite der Förderglieder 3 vorgesehen und vorzugsweise derart orientiert, dass sie die über die Breite des Endlosförderers 2 versetzten Querspalte miteinander verbinden. In Figur 1 ist angedeutet, dass die Umlenkrolle 4 umfangsseitig Mitnehmer hat, die mit Mitnehmer-Aufnahmen am Endlosförderer 2 in Antriebsverbindung zu bringen sind. Dabei wird die hier dargestellte Ausführung bevorzugt, bei welcher Einsenkungen 13 die am Endlosförderer 2 vorgesehenen Mitnehmer-Aufnahmen bilden.

Die ein Förderglied 3 bildenden Förderglied-Platten 11, die etwa denselben Außenumriss und vorzugsweise dieselbe Breite haben und die sich vorzugsweise nur in der für die Schrauben vorgesehenen Bohrungen unterscheiden, sind über Schraubverbindungen miteinander verbunden. Dazu sind Schrauben vorgesehen, die eine durch das Förderglied 3 hindurchgehende Schrauböffnung durchsetzen. Der Schraubenkopf ist an der randseitigen Förderglied-Platte 11 versenkt. Die auf der gegenüberliegenden Seite des Endlosförderers vorgesehene Förderglied-Platte besitzt demgegenüber ein Innengewinde, in dass die zugeordnete Schraube eingreift. Bei den dazwischen liegenden Förderglied-Platten sind die Durchtrittslöcher gewindelos ausgebildet, so dass die Schrauben die ihnen zugeordneten Durchtrittslöcher dieser Förderglied-Platten durchsetzen können. Der Endlosförderer 2 weist an seinen Außenseiten beidseits keine Vorsprünge auf. In Figur 5 ist gut zu erkennen, dass die dort übereinander gezeigten kleineren Bohrungen für das Zusammenschrauben der Förder-Platten bestimmt sind.

Das auszupressende Pressgut wird in Förderrichtung vor der Presszone PZ auf die Außenseite des Endlosförderers 2 aufgelegt. Dabei kann das Pressgut auf den Endlosförderer 2 fallen, bevor das auf dem Endlosförderer 2 befindliche Pressgut der Presszone PZ der Pressvorrichtung 1 zugeführt wird. Aus einem Vergleich der Figuren 1 und 6 wird deutlich, dass beidseits des Endlosförderers 2 zumindest im Bereich der Presszone PZ angeordnete und in Förderrichtung orientierte Leitplanken 16, 17 vorgesehen sind, die das Pressgut auf dem Endlosförderer 2 halten und ein Verdrängen zu den Seiten hin verhindern sollen. Ebenso wird der Endlosförderer 2 durch die beidseitigen Leitplanken 16, 17 geführt.

Die Presswalze 7 läuft in der Presszone PZ über das außenseitig auf dem Endlosförderer 2 befindliche Pressgut. Dabei wird die Presswalze 7 auf das Pressgut gedrückt. Das Pressgut gibt aufgrund des auf ihn ausgeübten Pressdrucks das bis dahin im Pressgut befindliche Fluid in der Presszone PZ ab. Die nach der Presszone PZ noch auf dem Enlosförderer 2 befindlichen Pressgut-Anteile können mit Hilfe eines an der Außenseite des Endlosförderers 2 angeordneten und vorzugsweise feststehenden Schabers vom Endlosförderer 2 abgekratzt werden, bevor der entsprechende Abschnitt des Endlosförderers 2 für einen erneuten Pressvorgang verwendet wird. Das in der Presszone PZ aus dem Pressgut herausgedrückte Fluid wird durch die zwischen den Fördergliedern 3 des Endlosförderers 2 und den Förderglied-Platten 11 oder den Fingern 8 und 9 verbleibenden Spalte im Endlosförderer 2 zu den Seiten hin beidseits abgeführt.

Da diese Spalte sich zur Innenseite hin soweit öffnen, dass auch dort gewisse Hohlräume entstehen und da diese Hohlräume im Vergleich zur ausgepressten Fluidmenge so groß dimensioniert sind, dass beträchtliche Mengen des Fluides im Endlosförderer 2 - isoliert vom trockenen Pressgut - zwischengespeichert werden können, bevor sie anschließend die Presszone PZ verlassen, wird der Abfluss des ausgepressten Fluides begünstigt und eine Leistungssteigerung der Pressvorrichtung erreicht. Da die Einsenkungen 13 die durch die Spalte entstehenden Hohlräume miteinander verbinden, wird der Abfluss des ausgepressten Fluides noch zusätzlich verbessert. Das vom Endlosförderer 2 abfließende Fluid wird vom derart ausgepressten Pressgut getrennt und kann nicht mehr von dem nunmehr getrockneten Pressgut absorbiert werden. Das vom Pressgut getrennte Fluid wird dem weiteren Pressvorgang entzogen.

In dem zur Presszone PZ führenden Einlaufbereich der Pressvorrichtung 1, in welchem der Endlosförderer 2 einen nahezu ungekrümmten Strang bildet, sind die zwischen den Fördergliedern 3 befindlichen Spalte soweit geschlossen, dass das Pressgut nicht hindurchfallen kann. Das Pressgut wird im Einlaufbereich der Pressvorrichtung 1 von oben zugeführt. In den Figuren 1 und 6 ist zu erkennen, dass die Pressvorrichtung eine Pressgut-Führung hat, die als mitlaufendes und über die Presswalze 7 sowie die Umlenkrolle 18 geführtes Förderband 19 ausgebildet ist. Das Förderband 19 ist hier als Stahlband ausgebildet, das auch hohen Drücken standhalten kann.

Da der Endlosförderer den zwischen der Presswalze 7 einerseits und der Umlenkrolle 4 andererseits vorgesehenen Einlaufwinkel nahezu halbiert, wird der Einzug des Pressguts in die Presszone PZ verbessert. In der Presszone PZ liegt der kettenartige Endlosförderer 2 zwischen den aneinandergepressten Walzen 4, 7. In der Presszone PZ, in der der Endlosförderer 2 auf der Umlenkrolle 4 aufliegt, sind die im Endlosförderer 2 vorgesehenen Spalte zur Außenseite hin fast vollständig geschlossen, während sie zur Innenseite hin offen sind. Diese offene Ausbildung auf der Innenseite kommt durch die Öffnung der Spalte zur Innenseite hin zustande. Da der Endlosförderer 2 in der Presszone PZ nahezu vor- und rücksprunglos ausgebildet ist und keine Ecken oder Kanten aufweist, wird auch die Kraftübertragung der durch Presswalze 7 und Umlenkrolle 4 ausgeübten Drehbewegung gut auf den Endlosförderer 2 übertragen. Durch die in der Aufbrechzone ABZ vorgesehene Umlenkung des Endlosförderers 2 werden die zwischen den Fördergliedern 3 befindlichen Quer- und Längsspalte des Endlosförderers 2 geöffnet. Dabei können in den Endlosförderer 2 gepresste Bestandteile des Pressguts durch die Relativbewegung der gegenüberliegenden Spaltflächen gelockert und durch den geöffneten Spalt herausgedrückt werden. Durch die in der Ausräumzone ARZ vorgesehene Umlenkung, in der der Endlosförderer 2 an seiner Außenseite eine konvexe Krümmung annimmt, werden die Spaltflächen erneut relativ zueinander bewegt. In den Spalten verbliebene eingepresste Reste des Pressguts werden zur Unterseite des Endlosförderers 2 geschoben oder nach außen hin aus dem Spalt gedrückt. Im Anschluss an die Ausräumzone ARZ sind die zwischen den Fördergliedern 3 befindlichen Spalte wieder frei und der Endlosförderer 2 kann für einen weiteren Befüll- und Pressvorgang verwendet werden. In einem kontinuierlichen Pressprozess öffnen und schließen sich die Förderglieder 3 des Endlosförderers 2, so dass bevorzugt flüssige oder viskose Bestandteile im Pressgut herausgepresst werden und durch die Spalte im Endlosförderer 2 vom derart getrockneten Pressgut separiert werden können.

Der Endlosförderer 2 ist in der Presszone PZ an seiner Außenseite fast vollständig geschlossen, während die Innenseite des Endlosförderers 2 sehr offen ausgebildet ist. Dies wird dadurch erreicht, dass der Radius r₁ an der Innenseite IS der Querspalte auf den Mittelpunkt A₁ der Bolzen 10 ausgerichtet ist, während der Mittelpunkt A₂ des Radius r₂ der Außenseite AS soweit darunter angeordnet ist, dass die beiden Radien an der Kettenoberseite fast zusammenlaufen, auf der Unterseite jedoch ausreichend voneinander entfernt sind. Die offene Ausbildung der Innenseite des Endlosförderers bei gleichzeitig geschlossener Außenseite wird weiterhin durch die Einformung 15 sowie die Einsenkungen 13 verbessert. Der Radius r₂ zur Außenseite AS der Querspalte ist zudem größer als der Radius r₁ an der Innenseite IS dieser Querspalte zwischen den Fördergliedern 3. Jedes Förderglied 3 hat zwei Drehachsen, die jeweils zu den benachbarten Fördergliedern angeordnet sind. Die Längsspalte zwischen den einander anliegenden Förderglied-Platten 11 sind an der Außenseite des Endlosförderers 2 fast geschlossen. Da der Endlosförderer in seinem mittleren und unteren Bereich die Einformungen 15 trägt, ist zwischen den Förderglied-Platten 11 ein Freiraum vorgesehen, der das Abfließen des ausgepressten Fluids erleichtert. Ein leichtes Abfließen des ausgepressten Fluids wird noch dadurch begünstigt, dass an der Innenseite des Endlosförderers 2 die Einsenkungen 13 angeordnet sind. Die die Innenseite des Endlosförderers 2 bildende Unterseite der Förderglieder 3 weist einen Radius auf, der etwa dem Radius der Umlenkrollen oder - walzen und insbesondere der Umlenkrolle 4 entspricht. Der Radius auf der die Außenseite des Endlosförderers 2 bildenden Oberseite der Förderglieder 3 ist entsprechend der Bauhöhe des Endlosförderers 2 größer, so dass die Außenseite des Endlosförderers 2 beim Umspannen einer Umlenkrolle oder -walze 4, 5, 6 einen Kreis beziehungsweise Zylinder bilden würde. Die Öffnungen des Endlosförderers 2 sind so angepasst, dass diese Öffnungen sich beim Anlegen des Endlosförderers 2 an die Umlenkrolle 4 im Bereich der Presszone PZ schließen. In der Presszone PZ sind diese Öffnungen im Endlosförderer 2 soweit geschlossen, dass bevorzugt flüssige oder viskose Bestandteile des Pressguts durch die Öffnungen im Endlosförderer 2 hindurchfließen können.

Durch die Geometrie der zwischen den benachbarten Fördergliedern 3 vorgesehenen Querspalte kann sich der Endlosförderer 2 aufbiegen. Durch die Relativbewegung der Spaltflächen lockert sich dabei das Pressgut. In der Ausräumzone ARZ wird das in den Endlosförderer 2 eventuell eingepresste Material entfernt. Dabei knickt der Endlosförderer 2 - ähnlich einem Katzenbuckel - ein. Die an der Außenseite vorstehende Nase der Förderglieder 3 fährt dabei über den Radius der Innenseite, wodurch eventuell eingedrungenes Material zur Innenseite des Endlosförderers 2 hin abgestreift oder zur Außenseite des Endlosförderers 2 durchgedrückt wird. Die einzelnen Förderglieder 3 sind entweder lang genug oder so miteinander verbunden, dass die Querspalte soweit voneinander entfernt sind, dass ein Herumführen des Endlosförderers 2 um ein im Vergleich zum Radius der Presswalze kleineren Radius möglich ist, ohne dass einzelne Bestandteile des Endlosförderers 2 miteinander kollidieren.

## Patentansprüche

1. Pressvorrichtung (1) mit einem Endlosförderer (2), der eine Vielzahl von Fördergliedern (3) hat, die zu einem endlos umlaufenden Strang miteinander verbunden sind und von denen benachbarte Förderglieder (3) jeweils über einen, eine Schwenkachse bildenden Bolzen (10) schwenkbar miteinander verbunden sind, sowie mit wenigstens einer Presswalze (7), die zur Druckbeaufschlagung des auf dem Endlosförderer (2) geförderten Pressguts zwischen der Presswalze (7) und dem Endlosförderer (2) in einer Presszone (PZ) vorgesehen ist, wobei benachbarte Förderglieder (3) des Endlosförderers (2) ineinandergreifende Finger (8, 9) aufweisen, welche Finger (8, 9) der diese Förderglieder (3) verbindende Bolzen (10) durchsetzt, und wobei die Förderglieder (3) in der Presszone (PZ) eine solche Schwenkposition zueinander einnehmen, dass die Außenseite des Endlosförderers (2) in diesem Bereich (PZ) eine vor- und rücksprunglose, plattenförmig geschlossene Oberfläche bilden, **dadurch gekennzeichnet, dass** der Presszone (PZ) eine Aufbrechzone (ABZ) in Umlaufrichtung des Endlosförderers (2) folgt, in welcher Aufbrechzone (ABZ) der Endlosförderer (2) derart umgelenkt wird, dass seine Außenseite konkav gebogen ist.

2. Pressvorrichtung:nach Anspruch 1, **dadurch gekennzeichnet, dass** wenigstens ein Förderglied (3) einstückig ausgebildet ist und an seinen, einem benachbarten Förderglied (3) zugewandten außenseitigen Umfangsteilbereich zumindest einen vorstehenden Finger (8, 9) trägt.

3. Pressvorrichtung nach Anspruch 1 oder 2, **dadurch gekennzeichnet, dass** wenigstens ein Förderglied (3) aus zumindest zwei, flachseitig aneinander anliegenden Förderglied-Platten (11) gebildet ist, die derart versetzt miteinander verbunden sind, dass ein über mindestens eine erste Förderglied-Platte (11) vorstehender Teilbereich wenigstens einer zweiten Förderglied-Platte (11) als Finger (8, 9) ausgebildet ist.

4. Pressvorrichtung nach Anspruch 3, **dadurch gekennzeichnet, dass** wenigstens ein Förderglied (3) als Plattenpaket ausgebildet ist, welches entweder aus mindestens einem ersten und zwei zweiten Förderglied-Platten (11) oder aus mindestens zwei ersten Förderglied-Platten (11) und einer zweiten Förderglied-Platte (11) gebildetet ist.:

5. Pressvorrichtung nach einem der Ansprüche 1 bis 4, **dadurch gekennzeichnet, dass** der Endlosförderer (2) auf seiner Innenseite quer zur Förderrichtung orientierte Einsenkungen (13) hat, in welche Einsenkungen (13) eine mit dem Endlosförderer (2) in Antriebsverbindung stehende drehantreibbare Umlenkwalze (4) oder Umlenkrolle eingreift.

6. Pressvorrichtung nach Anspruch 5, **dadurch gekennzeichnet, dass** die Einsenkungen (13) als rechtwinklig zur Förderrichtung orientierte Rillen oder Rinnen ausgebildet sind.

7. Pressvorrichtung nach Anspruch 5 oder 6, **dadurch gekennzeichnet, dass** die Einsenkungen (13) in gleichmäßigen Abständen über den Innenumfang des Endlosförderers (2) verteilt angeordnet sind.

8. Pressvorrichtung nach einem der Ansprüche 1 bis 7, **dadurch gekennzeichnet, dass** zwischen der Aufbrechzone (ABZ) und der Presszone (PZ) in Umlaufrichtung des Endlosförderers (2) eine Ausräumzone (ARZ) angeordnet ist, in welcher der Endlosförderer (2) derart umgelenkt wird, dass seine Außenseite konvex gebogen ist.

9. Pressvorrichtung nach einem der Ansprüche 1 bis 8, **dadurch gekennzeichnet, dass** der Endlosförderer (2) in der Presszone (PZ) um eine Umlenkrolle (4) oder -walze umläuft, und dass die Umlenkrolle (4) oder -walze sowie die Presswalze (7) oder -rolle den geringsten Abstand zueinander in einem Punkt oder in einem Bereich aufweisen, der auf einer durch die Drehachsen dieser Rollen oder Walzen (4, 7) verlaufenden Linie oder Ebene angeordnet ist.

10. Pressvorrichtung nach einem der Ansprüche 1 bis 9, **dadurch gekennzeichnet, dass** die in der Presszone (PZ) vorgesehene Umlenkrolle (4) im Vergleich zu der in der Aufbrechzone (ABZ) und/oder der Ausräumzone (ARZ) angeordneten Umlenkrolle (5, 6) einen größeren Durchmesser aufweist.

11. Pressvorrichtung nach einem der Ansprüche 1 bis 10, **dadurch gekennzeichnet, dass** die Finger (8, 9) der Förderglieder (3) jeweils ein Loch (14) aufweisen, in welchen Löchern (14) der benachbarte Förderglieder (3) verbindende Bolzen (10) die Förderglieder (3) durchsetzt.

12. Pressvorrichtung nach Anspruch 11, **dadurch gekennzeichnet, dass** die Bolzen (10) und/oder die an den Fingern (8, 9) der Förderglieder (3) vorgesehenen Löcher (14) eine reibungsarme oder reibungsmindernde Schicht und insbesondere eine Teflonschicht tragen.

13. Pressvorrichtung nach einem der Ansprüche 1 bis 12, **dadurch gekennzeichnet, dass** an den Fingern (8, 9) der Förderglieder (3) zumindest einseitig eine flachseitige und zur Innenseite hin offene Einformung (15) vorgesehen ist.

14. Pressvorrichtung nach Anpruch 13, **dadurch gekennzeichnet, dass** die Finger (8, 9) zur Außenseite des Endlosförderers (2) hin im Vergleich zu dem das Loch des entsprechenden Fingers (8, 9) im Übrigen umgrenzenden Finger-Teilbereich eine größere Dicke aufweist.

15. Pressvorrichtung nach einem der Ansprüche 11 bis 14, **dadurch gekennzeichnet, dass** der Mittelpunkt (A₂) des Radius (r₂) an der Außenseite AS der Querspalte eines Fördergliedes (3) derart tieferliegend ausgeführt ist, dass diese Förderglieder in der Presszone eine nahezu geschlossene Außenseite des Endlosförderers bilden und sich zur Innenseite des Endlosförderers hin öffnen.

16. Pressvorrichtung nach einem der Ansprüche 1 bis 15, **dadurch gekennzeichnet, dass** die Förderglieder (3) an ihrer, die Innenseite des Endlosförderers (2) bildenden Unterseite einen Radius haben, der etwa dem Radius der Umlenkrolle (4) entspricht.

17. Pressvorrichtung nach einem der Ansprüche 1 bis 16, **dadurch gekennzeichnet, dass** die Förderglieder (3) an ihrer, die Oberseite des Endlosförderers (2) bildenden Außenseite im Vergleich zu dem an der Unterseite der Förderglieder (3) vorgesehenen Radius einen entsprechend der Bauhöhe des Endlosförderers (2) größeren Radius aufweisen.

18. Pressvorrichtung nach einem der Ansprüche 5 bis 17, dass zumindest eines der Förderglieder (3) des Endlosförderers (2) auf seiner Unterseite die Einsenkungen (13) aufweist.

19. Pressvorrichtung nach Anspruch 18, **dadurch gekennzeichnet, dass** die an der Unterseite des zumindest einen Fördergliedes (3) vorgesehenen Einsenkungen (13) derart orientiert sind, dass sie (13) die über die Breite des Endlosförderers (2) versetzten Querspalte verbinden.

20. Pressvorrichtung nach einem der Ansprüche 1 bis 19, **dadurch gekennzeichnet, dass** die Umlenkrolle (4) oder - walze umfangsseitig Mitnehmer hat, die mit Mitnehmer-Aufnahmen am Endlosförderer (2) in Antriebsverbindung zu bringen sind.

21. Pressvorrichtung nach einem der Ansprüche 1 bis 20, **dadurch gekennzeichnet, dass** die ein Förderglied (3) bildenden Förderglied-Platten (11) über Schraubverbindungen miteinander verbunden sind.

22. Pressvorrichtung nach einem der Ansprüche 1 bis 21, **dadurch gekennzeichnet, dass** beidseits des Endlosförderers zumindest im Bereich der Presszone angeordnete und in Förderrichtung orientierte Leitplanken vorgesehen sind.

23. Pressvorrichtung nach einem der Ansprüche 1 bis 22, **dadurch gekennzeichnet, dass** dem Endlosförderer (2) eine Spannvorrichtung zugeordnet ist.

24. Pressvorrichtung nach Anspruch 23, **dadurch gekennzeichnet, dass** zumindest eine der Umlenkrollen (5) derart verstellbar in der Pressvorrichtung vorgesehen ist, dass die zumindest eine Umlenkrolle (5) als Spanneinrichtung für den Endlosförderer (2) dient.

25. Pressvorrichtung nach einem der Ansprüche 1 bis 24, **dadurch gekennzeichnet, dass** die Förderglied-Platten (11) des zumindest eines Fördergliedes sich vorzugsweise nur in der für die Bolzen (14) vorgesehenen Bohrung unterscheiden.

26. Pressvorrichtung nach einem der Ansprüche 1 bis 25, **dadurch gekennzeichnet, dass** die Förderglied-Platten (11) des zumindest einen Fördergliedes sich vorzugsweise nur in der für die Schrauben vorgesehenen Bohrung unterscheiden.

27. Verwendung einer Pressvorrichtung gemäß zumindest einem der Ansprüche 1 bis 26 zum Entfeuchten des Pressgutes und insbesondere zum Entfeuchten von Holzhackschnitzeln.

## Claims

1. Pressing device (1) having an endless conveyor (2) which has a large number of conveyor links (3), which are connected to one another to form an endlessly circulating track and of which adjacent conveying links (3) are each pivotably connected to one another via a pin (10) forming a pivot axis, and having at least one press roll (7), which is provided to apply pressure to the pressing material conveyed on the endless conveyor (2) between the press roll (7) and the endless conveyor (2) in a pressing zone (PZ), wherein adjacent conveyor links (3) of the endless conveyor (2) have interengaging fingers (8, 9), the pin (10) which connects these conveyor links (3) passing through these fingers (8, 9), and wherein the conveyor links (3) in the pressing zone (PZ) assume a pivoting position relative to one another such that the outer side of the endless conveyor (2) in this region (PZ) forms a surface which is closed in the form of a plate and is free of protrusions and recesses, **characterized in that** the pressing zone (PZ) is followed in the direction of circulation of the endless conveyor (2) by a break-open zone (ABZ), in which break-open zone (ABZ) the endless conveyor (2) is deflected in such a way that its outer side is bent concavely.

2. Pressing device according to Claim 1, **characterized in that** at least one conveyor link (3) is formed in one piece and, at its partial circumferential region on the outside facing an adjacent conveyor link (3), bears at least one protruding finger (8, 9).

3. Pressing device according to Claim 1 or 2, **characterized in that** at least one conveyor link (3) is formed of at least two conveyor link plates (11) of which the flat sides rest on one another, which are connected to one another with an offset in such a way that a sub-region of at least one second conveyor link plate (11) which projects over at least one first conveyor link plate (11) is formed as a finger (8, 9).

4. Pressing device according to Claim 3, **characterized in that** at least one conveyor link (3) is formed as a plate pack, which is formed either from at least one first and two second conveyor link plates (11) or from at least two first conveyor link plates (11) and a second conveyor link plate (11).

5. Pressing device according to one of Claims 1 to 4, **characterized in that** the endless conveyor (2) has hollows (13) oriented transversely to the conveying direction on its inner side, in which hollows (13) a deflection roll (4) or deflection roller that can be driven in rotation and is in drive connection with the endless conveyor (2) engages.

6. Pressing device according to Claim 5, **characterized in that** the hollows (13) are formed as grooves or channels oriented at right angles to the conveying direction.

7. Pressing device according to Claim 5 or 6, **characterized in that** the hollows (13) are arranged distributed at uniform intervals over the inner circumference of the endless conveyor (2).

8. Pressing device according to one of Claims 1 to 7, **characterized in that** between the break-open zone (ABZ) and the pressing zone (PZ) in the direction of circulation of the endless conveyor (2) there is arranged a clearance zone (ARZ), in which the endless conveyor (2) is deflected in such a way that its outer side is bent convexly.

9. Pressing device according to one of Claims 1 to 8, **characterized in that** the endless conveyor (2) runs around a deflection roller (4) or roll in the pressing zone (PZ), and **in that** the deflection roller (4) or roll and the press roll (7) or roller are at the shortest distance from each other at a point or in a region which is arranged on a line or plane extending through the axes of rotation of these rollers or rolls (4, 7).

10. Pressing device according to one of Claims 1 to 9, **characterized in that** the deflection roller (4) provided in the pressing zone (PZ) has a larger diameter as compared with the deflection roller (5, 6) arranged in the break-open zone (ABZ) and/or the clearance zone (ARZ).

11. Pressing device according to one of Claims 1 to 10, **characterized in that** the fingers (8, 9) of the conveyor links (3) each have a hole (14), in which holes (14) the pin (10) connecting adjacent conveyor links (3) passes through the conveyor links (3).

12. Pressing device according to Claim 11, **characterized in that** the pins (10) and/or the holes (14) provided on the fingers (8, 9) of the conveyor links (3) bear a low-friction or friction-reducing layer and in particular a Teflon layer.

13. Pressing device according to one of Claims 1 to 12, **characterized in that** a flat-sided moulding (15) that is open towards the inner side is provided on at least one side of the fingers (8, 9) of the conveyor links (3).

14. Pressing device according to Claim 13, **characterized in that** the fingers (8, 9) towards the outer side of the endless conveyor (2) have a greater thickness as compared with the finger sub-region which otherwise surrounds the hole in the corresponding finger (8, 9).

15. Pressing device according to one of Claims 11 to 14, **characterized in that** the centre (A₂) of the radius (r₂) on the outer side AS of the transverse gaps of a conveyor link (3) is designed to be located deeper in such a way that these conveyor links form a virtually closed outer side of the endless conveyor in the pressing zone and are open towards the inner side of the endless conveyor.

16. Pressing device according to one of Claims 1 to 15, **characterized in that**, on their underside forming the inner side of the endless conveyor (2), the conveyor links (3) have a radius which corresponds approximately to the radius of the deflection roller (4).

17. Pressing device according to one of Claims 1 to 16, **characterized in that**, on their outer side forming the upper side of the endless conveyor (2), the conveyor links (3) have a larger radius, corresponding to the overall height of the endless conveyor (2), as compared with the radius provided on the underside of the conveyor links (3).

18. Pressing device according to one of Claims 5 to 17, **characterized in that** at least one of the conveyor links (3) of the endless conveyor (2) has the hollows (13) on its underside.

19. Pressing device according to Claim 18, **characterized in that** the hollows (13) provided on the underside of the at least one conveyor link (3) are oriented in such a way that they (13) connect the transverse gaps that are offset over the width of the endless conveyor (2).

20. Pressing device according to one of Claims 1 to 19, **characterized in that** the deflection roller (4) or roll has drivers on its circumferential side, which can be brought into drive connection with driver receptacles on the endless conveyor (2).

21. Pressing device according to one of Claims 1 to 20, **characterized in that** the conveyor link plates (11) forming a conveyor link (3) are connected to one another via screw connections.

22. Pressing device according to one of Claims 1 to 21, **characterized in that** guide rails arranged on both sides of the endless conveyor at least in the region of the pressing zone and oriented in the conveying direction are provided.

23. Pressing device according to one of Claims 1 to 22, **characterized in that** a tensioning device is assigned to the endless conveyor (2).

24. Pressing device according to Claim 23, **characterized in that** at least one of the deflection rollers (5) is provided adjustably in the pressing device in such a way that the at least one deflection roller (5) serves as a tensioning device for the endless conveyor (2).

25. Pressing device according to one of Claims 1 to 24, **characterized in that** the conveyor link plates (11) of the at least one conveyor link differ preferably only in the bore provided for the pins (14).

26. Pressing device according to one of Claims 1 to 25, **characterized in that** the conveyor link plates (11) of the at least one conveyor link differ preferably only in the bore provided for the screws.

27. Use of a pressing device according to at least one of Claims 1 to 26 for dehumidifying the pressing material and in particular for dehumidifying woodchips.

## Revendications

1. Dispositif de pressage (1) avec un transporteur sans fin (2) qui possède une pluralité de maillons de transport (3) qui sont assemblés pour former une bande circulante sans fin, et dont les maillons de transport adjacents (3) sont reliés entre eux de façon pivotante par un tourillon (10) formant un axe de pivotement, ainsi qu'avec au moins un cylindre presseur (7) qui est prévu pour presser la matière à presser transportée sur le transporteur sans fin (2) entre le cylindre presseur (7) et le transporteur sans fin (2) dans une zone de pressage (PZ), dans lequel les éléments de transport (3) adjacents du transporteur sans fin (2) présentent des doigts (8, 9) s'imbriquant les uns dans les autres, lesquels doigts (8, 9) sont traversés par les tourillons (10) reliant ces maillons de transport (3), et dans lequel les maillons de transport (3) prennent entre eux dans la zone de pressage (PZ) une position de pivotement telle que la face extérieure du transporteur sans fin (2) forment dans cette zone (PZ) une surface sans saillie ni retrait, fermée de forme plane, **caractérisé en ce qu'**une zone de rupture (ABZ) suit la zone de pressage (PZ) dans le sens de circulation du transporteur sans fin (2), dans laquelle zone de rupture (ABZ) le transporteur sans fin (2) est retourné de telle sorte que sa face extérieure est incurvée de façon concave.

2. Dispositif de pressage selon la revendication 1, **caractérisé en ce qu'**au moins un maillon de transport (3) est formé d'une pièce et porte, dans sa partie périphérique extérieure proche d'un maillon de transport (3) adjacent, au moins un doigt (8, 9) faisant saillie.

3. Dispositif de pressage selon la revendication 1 ou 2, **caractérisé en ce qu'**au moins un maillon de transport (3) est formé d'au moins deux plaquettes (11) de maillon de transport disposées à plat les unes à côté des autres qui sont reliées entre elles de manière décalée de telle sorte qu'une partie faisant saillie au-dessus d'au moins une plaquette (11) du premier maillon de transport est configurée comme un doigt (8, 9) d'au moins une plaquette (11) du deuxième de maillon de transport (11).

4. Dispositif de pressage selon la revendication 3, **caractérisé en ce qu'**au moins un maillon de transport (3) est configuré comme un paquet de plaquettes qui est formé soit d'au moins une plaquette (11) du premier maillon de transport et de deux plaquettes (11) du deuxième maillon de transport, soit d'au moins deux plaquettes (11) du premier maillon de transport et d'une plaquette (11) du deuxième maillon de transport.

5. Dispositif de pressage selon une des revendications 1 à 4, **caractérisé en ce que** le transporteur sans fin (2) a sur sa face intérieure des cavités (13) orientées transversalement à la direction de transport dans lesquelles s'engage un cylindre de déviation (4) ou rouleau de déviation pouvant être entraîné en rotation et en liaison d'entraînement avec le transporteur sans fin (2).

6. Dispositif de pressage selon la revendication 5, **caractérisé en ce que** les cavités (13) sont configurées comme des rainures ou des sillons orientés perpendiculairement à la direction de transport.

7. Dispositif de pressage selon la revendication 5 ou 6, **caractérisé en ce que** les cavités (13) sont disposées à égale distance les unes des autres sur la périphérie intérieure du transporteur sans fin (2).

8. Dispositif de pressage selon une des revendications 1 à 7, **caractérisé en ce qu'**entre la zone de rupture (ABZ) et la zone de pressage (PZ) dans le sens de circulation est disposée une zone de déchargement (ARZ) dans laquelle le transporteur sans fin (2) est retourné de telle sorte que sa face extérieure est incurvée de façon convexe.

9. Dispositif de pressage selon une des revendications 1 à 8, **caractérisé en ce que** le transporteur sans fin (2) tourne dans la zone de pressage (PZ) autour d'un rouleau ou cylindre de déviation (4), et que le rouleau ou cylindre de déviation (4) ainsi que le cylindre ou rouleau de pressage (7) présentent la plus petite distance entre eux en un point ou dans une zone qui se trouve sur une ligne ou un plan traversant les axes de rotation de ces rouleaux ou cylindres (4, 7).

10. Dispositif de pressage selon une des revendications 1 à 9, **caractérisé en ce que** le rouleau de déviation (4) prévu dans la zone de pressage (PZ) présente un plus grand diamètre que le rouleau de déviation (5, 6) disposé dans la zone de rupture (ABZ) et/ou la zone de déchargement (ARZ).

11. Dispositif de pressage selon une des revendications 1 à 10, **caractérisé en ce que** les doigts (8, 9) des maillons de transport (3) présentent chacun un orifice (14), le tourillon (10) reliant les maillons de transport (3) adjacents traversant les maillons de transport (3) au niveau de ces orifices (14).

12. Dispositif de pressage selon la revendication 11, **caractérisé en ce que** les tourillons (10) et/ou les orifices (14) prévus au niveau des doigts (8, 9) des maillons de transport (3) portent une couche à faible friction ou réduisant la friction et en particulier une couche de Téflon.

13. Dispositif de pressage selon une des revendications 1 à 12, **caractérisé en ce que** sur les doigts (8, 9) des maillons de transport (3) est prévue au moins sur une face une empreinte (15) plane et ouverte vers la face intérieure.

14. Dispositif de pressage selon la revendication 13, **caractérisé en ce que** les doigts (8, 9) présente une plus grande épaisseur vers la face extérieure du transporteur sans fin (2) que dans la partie des doigts entourant par ailleurs l'orifice du doigt (8, 9) correspondant.

15. Dispositif de pressage selon une des revendications 11 à 14, **caractérisé en ce que** le point central (A₂) du rayon (r₂) est placé plus bas sur la face extérieure (AS) des fentes transversales d'un maillon de transport (3) de sorte que ces maillons de transport forment dans la zone de pressage une face extérieure presque fermée du transporteur sans fin et s'ouvrent vers la face intérieure du transporteur sans fin.

16. Dispositif de pressage selon une des revendications 1 à 15, **caractérisé en ce que** les maillons de transport (3) ont sur leur face inférieure formant la face intérieure du transporteur sans fin (2) un rayon qui correspond sensiblement au rayon du rouleau de déviation (4).

17. Dispositif de pressage selon une des revendications 1 à 16, **caractérisé en ce que** les maillons de transport (3) présentent sur leur face extérieure formant la face supérieure du transporteur sans fin (2) un rayon supérieur au rayon prévu sur la face inférieure des maillons de transport (3), correspondant à la hauteur globale du transporteur sans fin (2).

18. Dispositif de pressage selon une des revendications 5 à 17, **caractérisé en ce qu'**au moins un des maillons de transport (3) du transporteur sans fin (2) présentent les cavités (13) sur sa face inférieure.

19. Dispositif de pressage selon la revendication 18, **caractérisé en ce que** les cavités (13) prévues sur la face inférieure de l'au moins un maillon de transport (3) sont orientées de sorte qu'elles relient les fentes transversales décalées sur la largeur du transporteur sans fin (2).

20. Dispositif de pressage selon une des revendications 1 à 19, **caractérisé en ce que** le rouleau ou cylindre de déviation (4) possède sur sa périphérie des organes d'entraînement qui doivent être mis en liaison d'entraînement avec des logements d'organe d'entraînement sur le transporteur sans fin (2).

21. Dispositif de pressage selon une des revendications 1 à 20, **caractérisé en ce que** les plaquettes de maillon de transport (11) formant un maillon de transport (3) sont reliées entre elles par des raccords vissés.

22. Dispositif de pressage selon une des revendications 1 à 21, **caractérisé en ce que** de part et d'autre du transporteur sans fin (2) sont prévues des glissières de guidage disposées au moins dans une région de la zone de pressage et orientées dans la direction de transport.

23. Dispositif de pressage selon une des revendications 1 à 22, **caractérisé en ce qu'**un dispositif de serrage est associé au transporteur sans fin (2).

24. Dispositif de pressage selon une la revendication 23, **caractérisé en ce qu'**au moins un des rouleaux de déviation (5) prévus dans le dispositif de pressage est réglable de telle sorte que cet au moins un rouleau de déviation (5) sert de dispositif de serrage pour le transporteur sans fin (2).

25. Dispositif de pressage selon une des revendications 1 à 24, **caractérisé en ce que** les plaquettes de maillon de transport (11) de l'au moins un maillon de transport (3) se distinguent de préférence seulement dans l'orifice prévu pour les tourillons (14).

26. Dispositif de pressage selon une des revendications 1 à 25, **caractérisé en ce que** les plaquettes de maillon de transport (11) de l'au moins un maillon de transport (3) se distinguent de préférence seulement dans l'orifice prévu pour les vis.

27. Utilisation d'un dispositif de pressage selon au moins une des revendications 1 à 26 pour déshumidifier la matière à presser et en particulier pour déshumidifier des copeaux de bois.
